# EUROPEAN PATENT APPLICATION

(11) **EP 2 335 473 A1**
(43) Date of publication of application: **22.06.2011**
(21) Application number: 10193239.0
(22) Date of filing: 01.12.2010
(51) Int. Cl.: A01G 9/02, A47G 7/04, A47H 27/00

(54) **Vase unit for a vertical garden and system comprising such a vase unit**

(30) Priority: 11.12.2009 IT BS20090222
(71) Applicant: C.O.A.R S.r.l., 25024 Porzano di Leno (BS) (IT)
(72) Inventor: Roveggio, Martino, 25024 Porzano di Leno, BRESCIA (IT); Roveggio, Marco, 25024 Porzano di Leno, BRESCIA (IT)
(74) Representative: Pulieri, Gianluca Antonio

(57) **Abstract**

A system for making a vertical garden comprises a vase unit (20). The unit (20) comprises a bottom beam (42) which forms the bottom of the tub, two side walls (24). The bottom portion (44) leaves a drainage duct (80) free to allow drainage of the water for drainage of the tub. The tub is delimited by aluminium extrudates hooking to each other. The system is modular and economical to produce.

## Description

The present invention relates to a system for making a vertical garden, for indoors or outdoors.

In the building trade, systems enabling the covering of the facade of a building with plants, so as to make a "vertical garden" are widespread and are becoming increasingly popular with users.

The known systems however present innumerable drawbacks, connected mainly to the need to recuperate the water used to irrigate the plants.

Frequently, the known systems are unable to effectively recuperate the water draining through the vases, on occasion leading to rivulets flowing down the facade or blockages caused by the formation of obstructions of organic material such as leaves and the like.

Furthermore, the drainage constitutes a structural complication of the known systems, making them more complex to assemble.

The aim of the present invention is to make a vertical garden system which overcomes the drawbacks mentioned with reference to the prior art.

Such purpose is achieved by a system according to claim 1. The dependent claims describe embodiment variations.

The characteristics and advantages of the system according to the present invention will be evident from the following description, made by way of a non-limiting example, with reference to the drawings below, wherein:

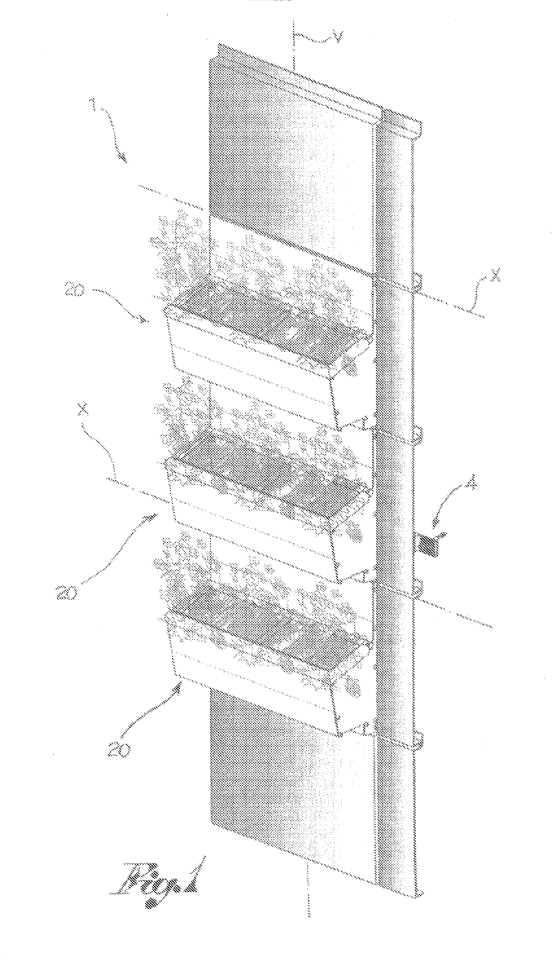

- figure 1 shows an anterior axonometric view of a system according to the present invention, with the parts assembled;

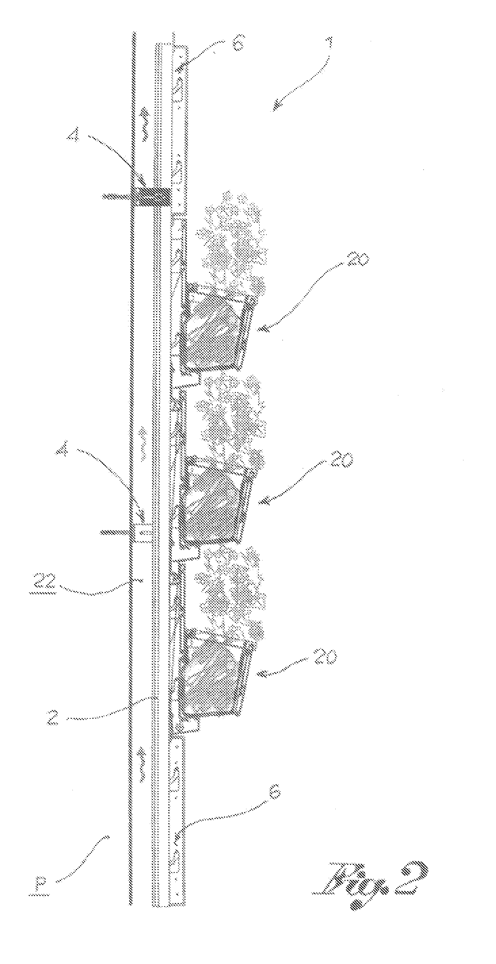

- figure 2 shows a lateral view partly in cross-section of the system in figure 1, assembled to a wall of a building;

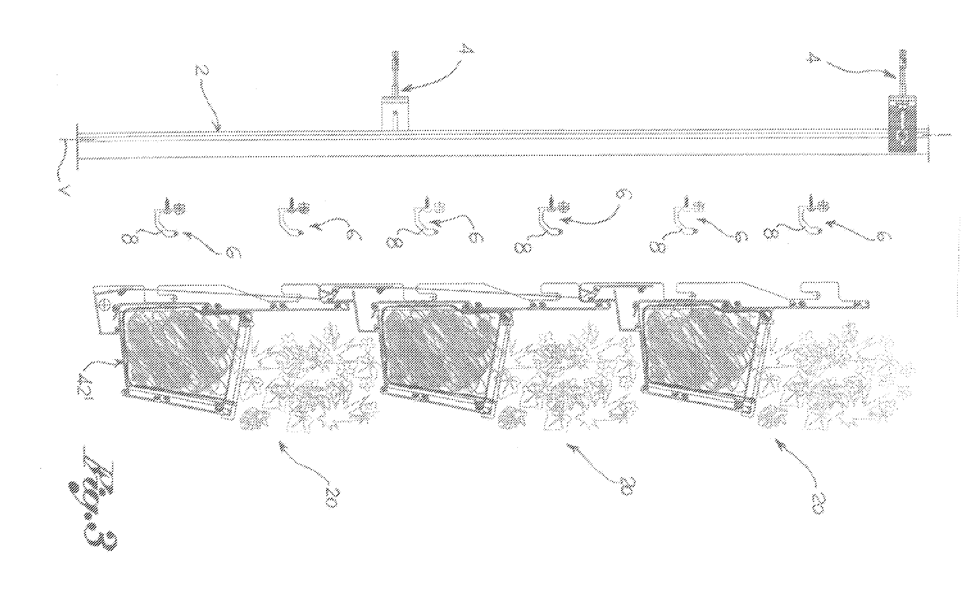

- figure 3 shows a further variation of the system according to the invention, in separate parts;

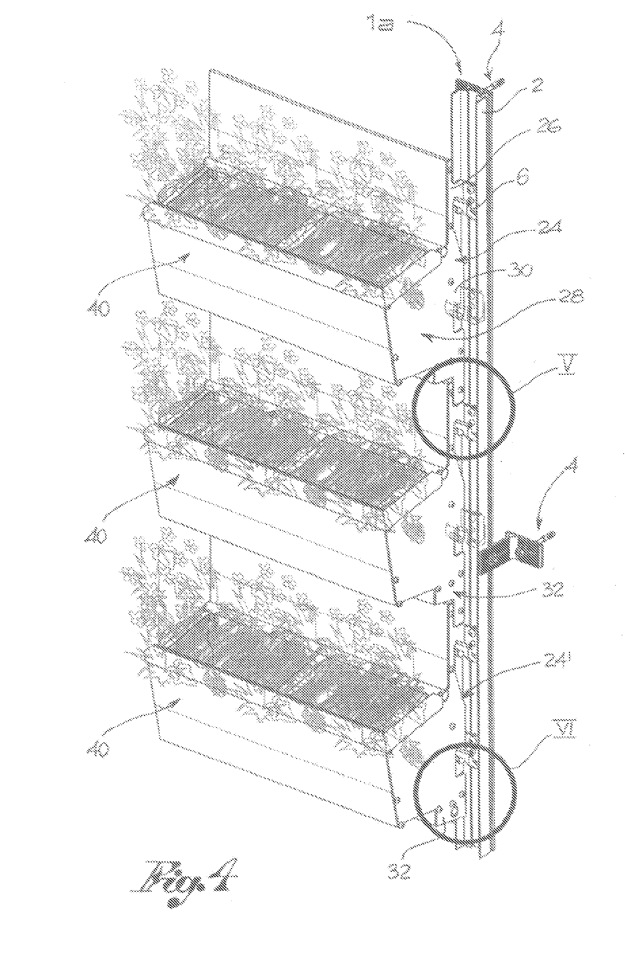

- figure 4 shows a further axonometric view of the system in figure 1;

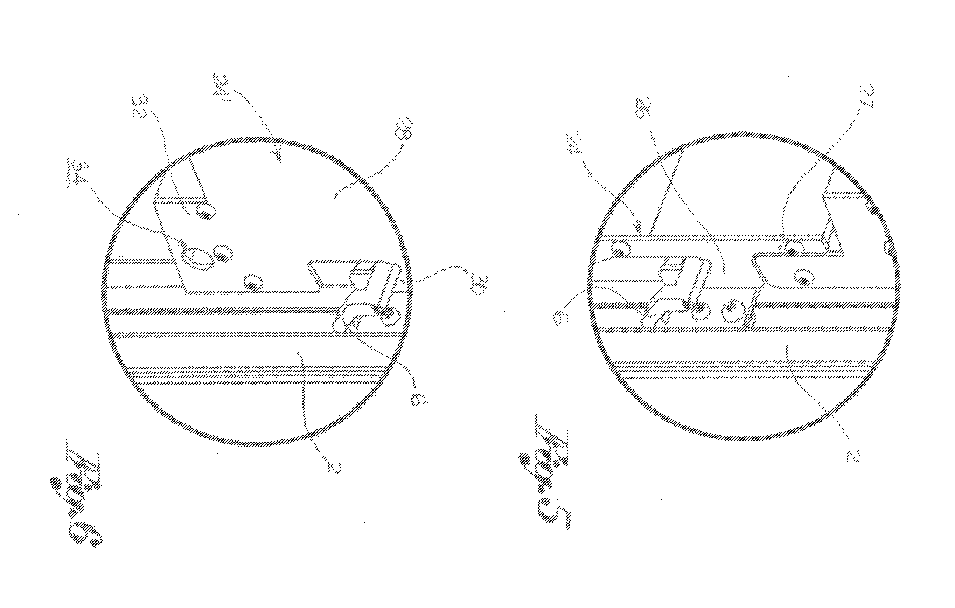

- figures 5 and 6 are enlargements of the areas V and VI in figure 4;

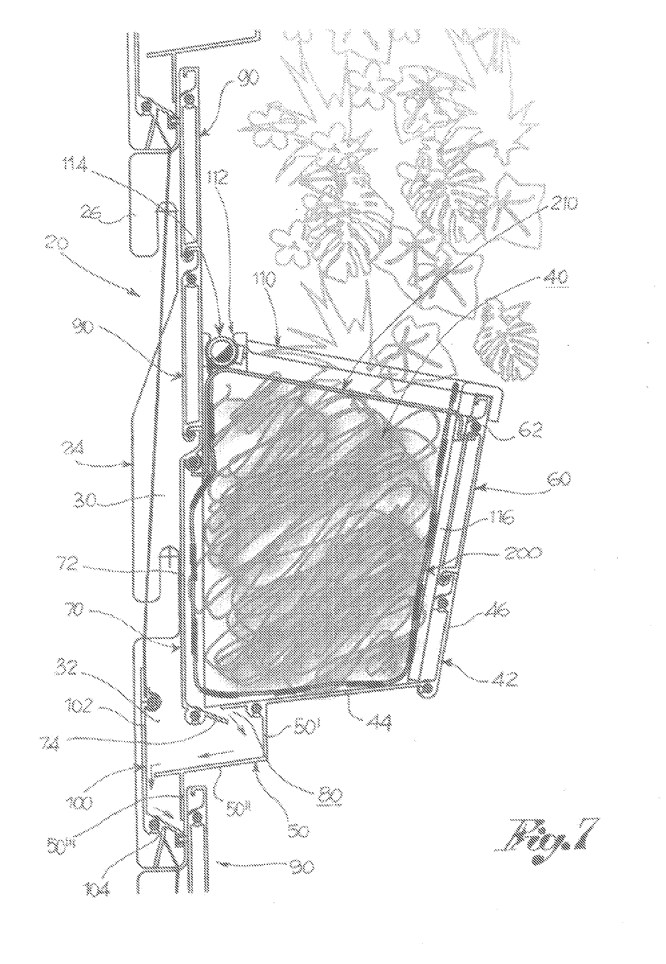

- figure 7 shows a lateral view partially in cross-section of a vase unit of the system according to the invention;

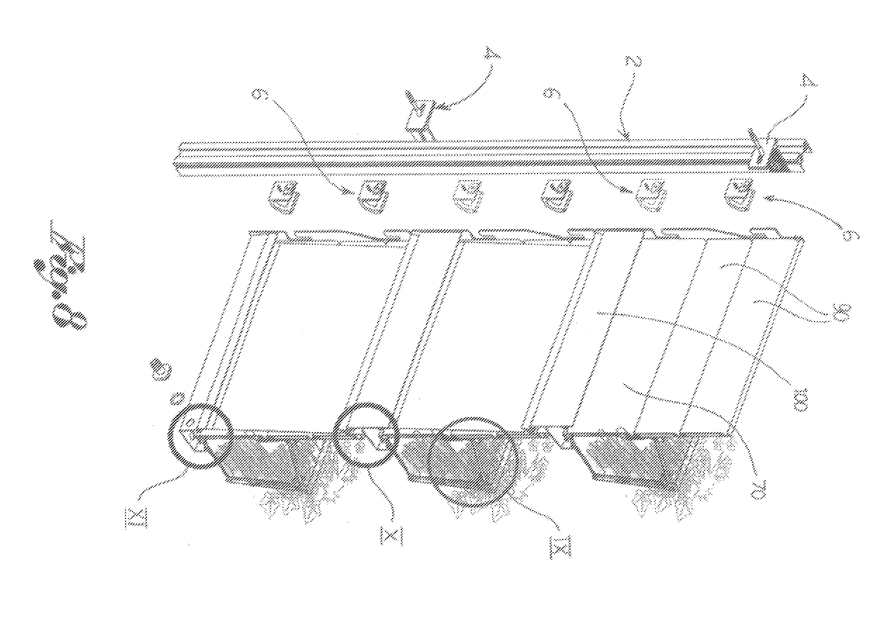

- figure 8 shows a rear axonometric view of the system in figure 1, in separate parts;

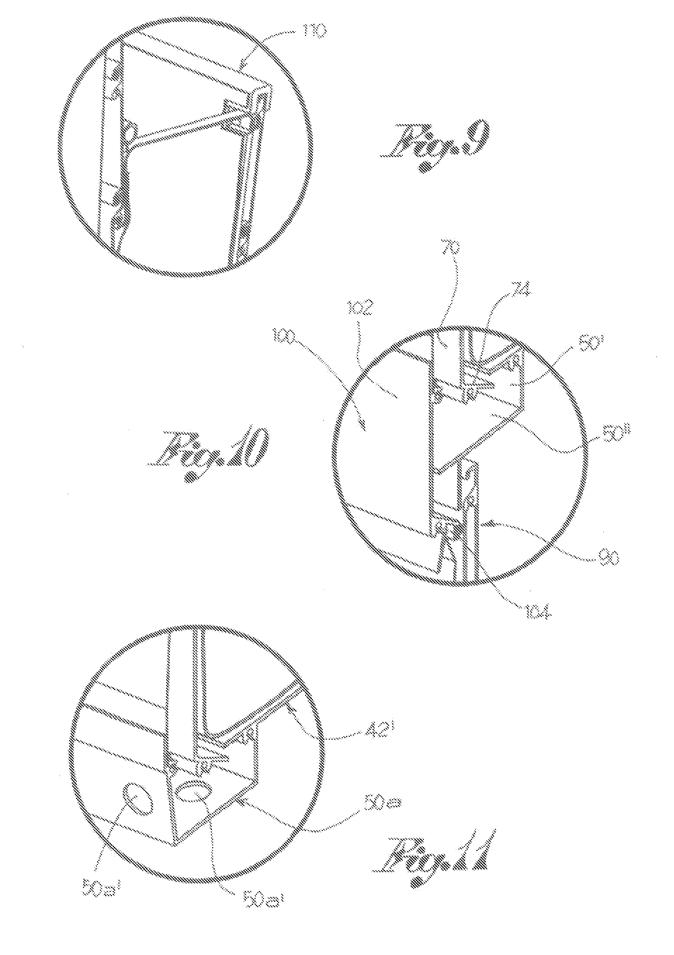

- figures 9, 10 and 11 show respective enlargements of the areas IX , X and XI in figure 8;

- figure 12 shows a diagram of an example of an apparatus comprising the system according to the present invention;

- figure 13 shows a lateral view partially in section of a vase unit of the system according to a further embodiment of the invention; and

- figure 14 shows an enlargement of the area XIV in figure 13.

With reference to the appended drawings, reference numeral 1 globally denotes a system for making a vertical garden on a facade, for indoor or outdoor use.

The system 1 is destined to be connected to a wall P, such as the outside wall of a building, made using the usual construction techniques.

The system 1 comprises a plurality of support units 1a and a plurality of vase units 20; the support units are suitable to be joined to the wall P and to form a support for attaching the vase units 20, for example by hanging.

According to the embodiment shown, a support unit 1a comprises at least two struts 2 having a main extension along a vertical axis V, coinciding substantially with the upward extension direction of the wall P, to be covered. The two struts 2 are attached to the wall P so to be transversally spaced out, in other words distanced along a transversal direction X perpendicular to the vertical axis V.

A frontal direction F is further defined as the outgoing direction from the facade plane, parallel to the ground plane.

The struts 2 are attached to the wall P by attachment devices, preferably adjustable.

For example, the attachment devices comprise flanges 4, L-shaped, fitted with screws or pins, vertically distanced.

Said flanges 4 make it possible to adjust the position of the strut transversally and frontally, by virtue of the slots which the head of the screw or pin slides in.

The support unit 1a further comprises, according to a preferred embodiment, a plurality of hooking elements 6, attachable to the strut 2, for example by a threaded screw, positioned so as to be vertically distanced.

Preferably, the hooking element 6 can be attached to the strut in a vertically adjustable manner, for example by means of a cam device.

Preferably, the hooking element 6 comprises a hook portion 8, facing upwards, suitable for hanging the further components of the system.

The system 1 further comprises at least one vase unit 20. The vase units 20 can be hooked, for example by hanging, to the support units 1a.

The vase units 20 can be positioned alongside each other in a transversal direction X and/or above each other in a vertical direction V, to create the visible facade.

In other words, the system 1 can be modulated in the sense that the presence of the vase units 20 can be repeated vertically and transversally, according to taste and to specific requirements.

The support units 1a are able to support the vase units 20 so as to form a cavity 22 between said vase units 20 and the wall P.

Advantageously, the cavity 22 enables an upward flow of air to be created in a vertical direction along the wall P; in other words, the system 1 is ventilated, in that it permits the upward flow of air between the vase units and the wall P.

A vase unit 20 comprises two side plates 24, positioned so as to be transversally distanced, reciprocally facing, with a thickness of plate in the transversal direction, such as to form the sides of the vase unit.

The side plate 24 comprises a first hooking portion 26 provided with a hooked part facing downwards, suitable to engage with the hooking element 6 of the support unit 1a, to hang the vase unit 20 to the support unit 1a.

Preferably, the hooking portion 26 terminates above with an undercut profile 27.

Furthermore, the side plate 24 comprises a containment portion 28, projecting frontwards in relation to the hooking portion 26.

Preferably, the containment portion 28 also has a second hooking portion 30, for hooking a further hooking element 6.

Moreover, the side plate 24 comprises a tail piece 32, indented frontally in relation to the containment portion 28, having a stepped profile.

The undercut profile 27 of the hooking portion 26 is complementary to the stepped profile of the tail piece 32, so that the side plate 24 can be coupled with the side plate of the vase unit below or above it.

Preferably, the side plate 24 comprises a transversal seat 112 able to house a tube 114 of an irrigation system, perforated at intervals to let the water flow towards the plants.

At least one side plate, and in particular the base side plate 24', in other words the one defining the vase unit 20 at the minimum upward height of the wall P, has a drainage hole 34, preferably in the area of least height, in other words through the tail piece 32.

The vase unit 20 further comprises a tub 40, delimited transversally, that is at the two transversal ends, by the containment portions 28 of the side walls 24.

The tub 40 comprises a first bottom beam 42, having a transversal extension, comprising:

- a bottom portion 44 which at least partially forms the bottom of the tub 40, which extends from an end proximal to the wall P to an end distal from the wall P.

- preferably, a lower front portion 46, connected at the bottom portion 44 to the distal end of the wall P, inclined in relation to it, the outer surface of which at least partially forms the visible front surface of the tub;

- preferably, a deviation portion 50, connected to the bottom portion 44 at the end proximal to the wall P, having an L-shaped profile, with a vertical section 50' projecting vertically from the bottom portion 44, a horizontal portion 50" connected to the vertical portion and such as to extend towards the wall P, and a terminal portion 50"', again vertical, connected to the horizontal portion 50"' and projecting vertically from it.

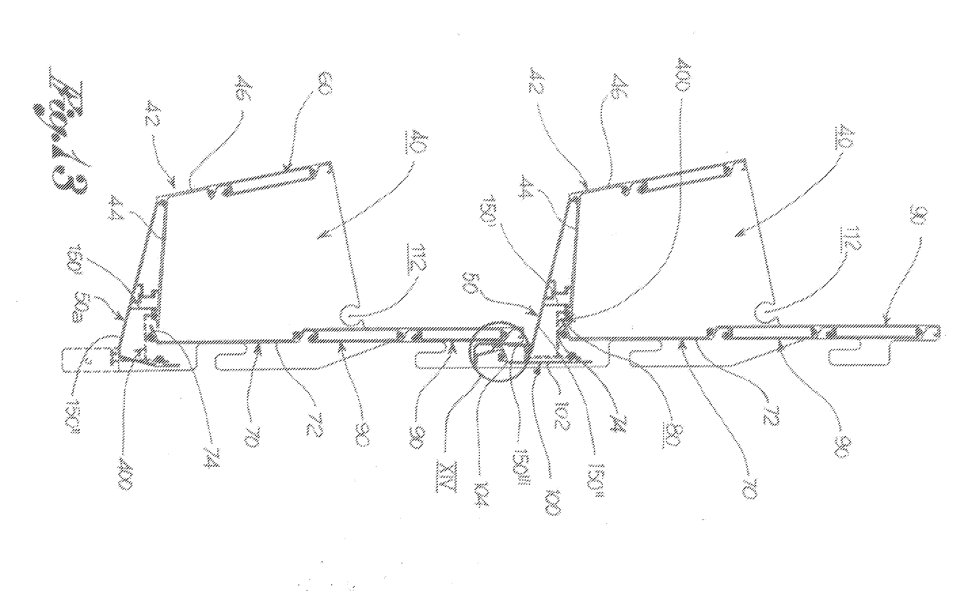

According to a further embodiment, the deviation portion 50 is a beam structurally separate from the bottom beam 42 and is hooked to the bottom portion 44 (figure 13).

The deviation portion 50 is in such case hooked to the bottom portion 44 at the end proximal to the wall P, having an L-shaped profile, with a vertical section 150' projecting vertically from the bottom portion 44, a horizontal section 150" connected to the vertical section and such as to extend towards the wall P, and a terminal section 150"', again vertical, connected to the horizontal section 150" and projecting vertically from it.

Preferably, the bottom beam 42 and/or the deviation portion 50 are made in a single piece, for example by extrusion or moulding, for example in aluminium alloy or PVC.

At least one deviation portion, that is the base deviation portion 50a belonging to the vase unit 20 at the minimum height of the wall P, has a closed section for collection of the drainage water, and holes for drainage.

The tub 40 further comprises a second front beam 60, having a transversal extension, connected to the bottom beam 42 by hooking onto the lower front portion 46.

The front beam 60 at least partially forms the visible front surface of the tub, together with the lower front portion 46 of the bottom beam 42.

The upper rim 62 of the front beam 60 forms the rim of the tub 40 between the side walls 24.

Preferably, the second beam 60 is made in a single piece, for example by extrusion or moulding, for example in aluminium alloy or PVC.

Moreover, the tub 40 comprises a third shoulder beam 70, having a transversal extension, supported by the side walls 24, comprising:

- a portion of body 72 substantially parallel to the wall P having a vertical extension;

- a drainage portion 74, connected to the portion of body 72, at the lower end of it; preferably, the drainage portion 74 is sloping downwards in a vertical direction.

In particular, the bottom portion 44 of the bottom beam 42, at the end proximal to the wall P, and the drainage portion 74 of the shoulder beam 70 are shaped so as to form a drainage duct 80 for the excess water in the tub 40.

Preferably, the third beam 70 is made in a single piece, for example by extrusion or moulding, for example in aluminium alloy or PVC.

The system 1 further comprises one or more spacer beams 90, having a transversal extension, attached between the side plates 24 and positioned so as to vertically overlap, for example, hooked to each other, so as to cover the distance from the upper end of the shoulder beam 70 of the tub 40 and the tail piece 32 of the side plate 24 of a further vase unit overlapping the first vase unit 20. Preferably, the upper end of the last spacer beam 90 before a further unit above, abuts with the terminal section of the deviation portion of the bottom beam of the tub above.

The system 1 further comprises an auxiliary beam 100, having a transversal extension, joined between the side plates 24, in particular between the tail-pieces 32 of these, substantially parallel to the wall P.

The auxiliary beam 100 comprises:

- a portion of body 102 preferably placed on the imaginary extension of the horizontal section 50" of the deviation portion 50, for example perpendicular, towards the wall P,; and

- preferably, a guide portion 104, connected to the portion of body 102 at its lower end; the guide portion 104 terminates so as to be distanced from the spacer beam which reaches the side wall of the vase unit below the vase unit 20 described; preferably, the guide portion 104 is inclined downwards.

Advantageously, the water draining through the tub 40 which comes out of the drainage duct 80, gushes out of the horizontal section 50" and meets the portion of body 102 of the auxiliary beam 100, thereby breaking the jet and slowing the downstream flow.

Moreover, the drained water continues its descent along the guide portion 104, gushing out lastly from it against the rear surface of the spacer beam 90 of the vase unit underneath, to flow into the horizontal section 50" of the vase unit underneath.

According to a preferred embodiment such as that with a deviation portion 50 separate from the bottom beam 42 (figure 13), the system 1 comprises a reinforcement beam 400, having a transversal extension, hooked to the bottom beam 42, at the distal end of the wall P, to the drainage portion 74 of the shoulder beam 70 and to the auxiliary beam 100 to strengthen the structure.

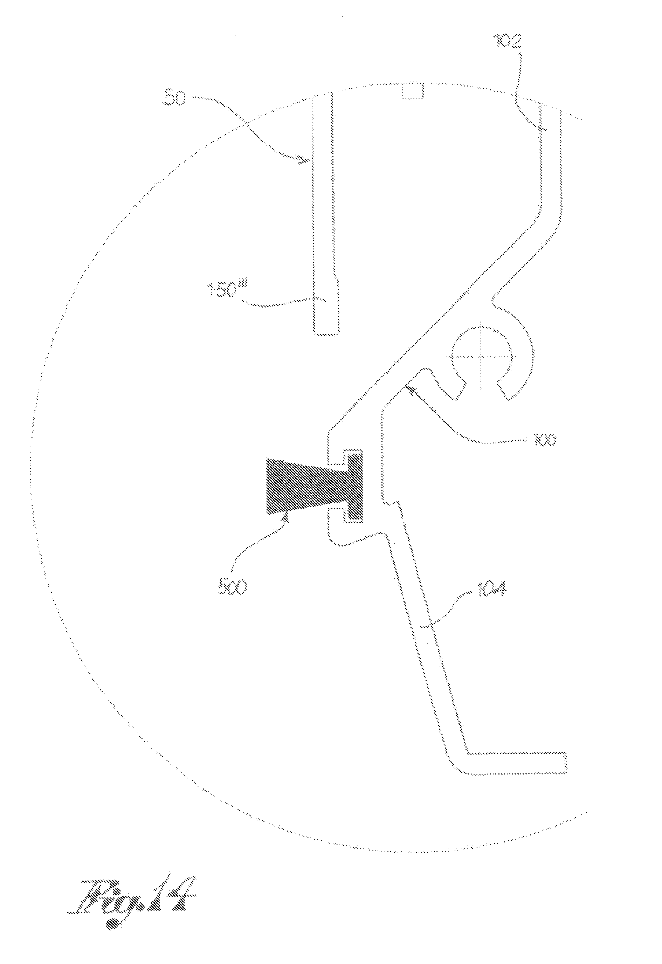

According to a preferred embodiment such as that with a deviation portion 50 separate from the bottom beam 42 (figures 13 and 14), the system 1 comprises a brush 500, having a transversal extension, hooked to the auxiliary beam 100 and in particular to the guide portion 104 of the same and facing the spacer beam 90, so as to interrupt the dripping water and deviate it towards the spacer beam for drainage.

According to a preferred embodiment the system 1 further comprises a cornice 110, for example in plastic or wood, which defines the entrance of the tub 40.

According to one embodiment moreover, the cornice 110 comprises a wall 116 which extends into the tub 40, for example starting from the front portion of the cornice, extending so as to internally overlap the front beam 60 and the lower front portion 46 of the bottom beam 42.

Preferably, moreover, the system 1 comprises a fabric or sack 200 housed in the tub 40, for containing the soil substrate.

Preferably, moreover, the system 1 comprises at least one safety element 210, to prevent the sack 200 from coming out of the tub 40.

For example, the safety element is connected to the upper end of the front beam 60 and to the upper end of the shoulder beam 70.

According to one embodiment for each tub 40 two or more transversally distanced safety elements 210 are provided, depending on the length of the tub.

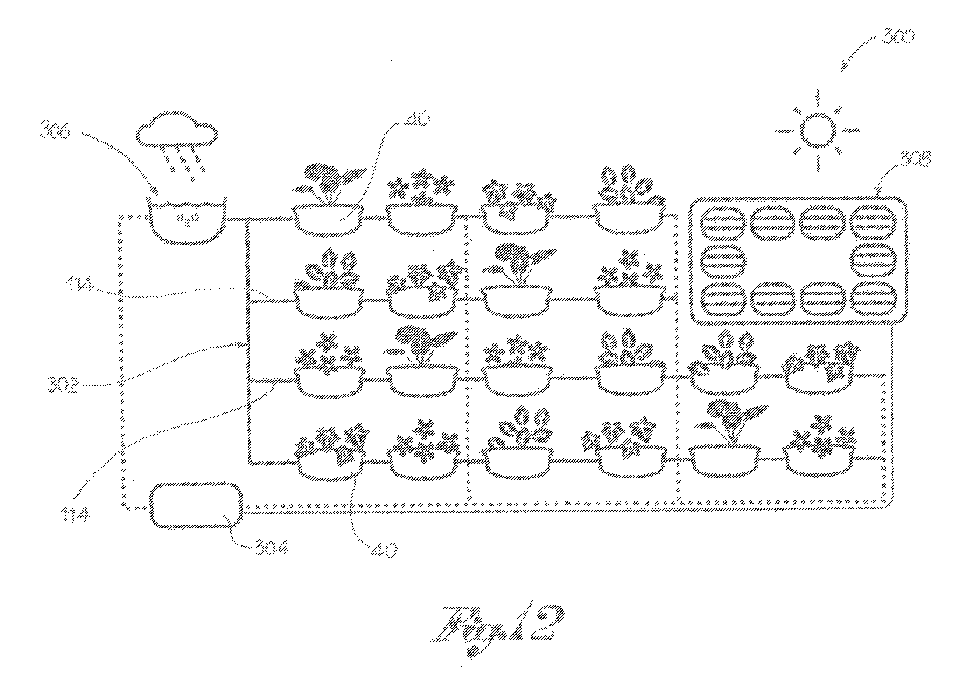

According to one embodiment, a vertical garden apparatus 300 comprises (figure 12):

- the system 1 comprising several tubs 40;

- an irrigation system 302 comprising the tubes 114 for irrigating the vase units 20, in particular the tubs 40;

- a pump 304 to supply the irrigation system 302;

- a water tank 306, which the pump 304 is connected to, for example, exposed so as to collect rain water;

- a solar panel 308, to power the pump 304 electrically.

Innovatively, the system according to the invention enables an extremely advantageous recovery of the water draining from the tub, without creating rivulets or dirtying the wall.

Advantageously, moreover, the tub of the vase unit can be dismantled into flat components, enabling transport with occupation of very little space.

Moreover, advantageously, the system can be fully dismantled and recycled or replaced as needed.

According to a further advantageous aspect, the system is not subject to corrosion.

Moreover, according to an advantageous aspect, the wall inserted in the tub has a protective thermic effect.

According to a further advantageous aspect, the system is adjustable; for example, the vase units are hooked to the struts so as to enable adjustment of the position, improving their alignment and the appearance of the system.

Advantageously, the system is extremely safe in terms of preventing the detachment of the vase units from the struts and the spillage of plants or soil from the tubs.

Moreover, advantageously, the system is mainly composed of sections joined to each other, thereby considerably reducing production costs.

According to a further advantageous aspect, each vase unit can be separately watered, for example according to plant requirements.

Advantageously, moreover, the base vase unit, in other words the one positioned at the lowest height, appears aesthetically identical to the others, even though its deviation portion acts as a collector of the drained water.

It is clear that a person skilled in the art, may make modifications to the system described above so as to satisfy contingent requirements.

For example, in one embodiment variation, the support unit comprises vertically distanced horizontal struts, in other words extending along a substantially horizontal transversal axis, to which the hooking elements are attached so as to hang the vase units.

According to a further embodiment, the system comprises heating devices able to heat the tub of the vase unit.

For example, the heating devices comprise a hot water circuit, hydraulically connected to the wall inserted in the tub; the hot water passing through the wall heating the plants.

According to a further example, the heating devices comprise an electric resistor, for example, housed in the wall inserted in the tub.

Such variations also fall within the sphere of protection as defined by the following claims.

## Claims

1. Vase unit (20) for a vertical garden comprising:
- a bottom beam (42) extending along a transversal axis (X), comprising a bottom portion (44) which at least partially forms the bottom of the tub;
- two side walls (24) transversally distanced, each coupled to a relative end of the bottom beam, to delimit a tub (40) to contain garden plants;
wherein the bottom portion (44) leaves a drainage duct (80) free to allow drainage of the water for drainage of the tub (40).

2. Unit according to claim 1, comprising a shoulder beam (70) having a transversal extension, wherein the shoulder beam (70) and the bottom portion (44) are separate and define the drainage duct (80).

3. Unit according to claim 1 or 2, wherein the bottom beam (42) is a single extruded or moulded piece, for example in aluminium or PVC.

4. Unit according to any of the claims from 1 to 3, wherein the shoulder beam (70) is a single extruded or moulded piece, for example in aluminium or PVC.

5. Unit according to any of the previous claims wherein the bottom beam (42) comprises a lower frontal portion (46), joined to the bottom portion (44) and inclined in relation to it.

6. Unit according to any of the previous claims, comprising a deviation portion (50) connected to the bottom portion (44) having a vertical section (50') projecting vertically from the bottom portion (44) and a horizontal section (50") joined to the vertical section.

7. Unit according to any of the previous claims, wherein the shoulder beam (70) comprises a drainage portion (74) inclined downwards vertically, so as to form the drainage duct (80) with the bottom portion (44).

8. Unit according to any of the previous claims, comprising a front beam (60), having a transversal extension, connected to the bottom beam (42) by means of a hook, wherein the front beam (60) forms at least partially the visible front surface of the tub and the upper rim (62) of the front beam (60) forms the rim of the tub (40) between the side walls (24).

9. Unit according to claim 8, wherein the front beam is a single extruded or moulded piece, for example in aluminium or PVC.

10. System (1) for creating a vertical garden on a wall (P), comprising:
- a plurality of struts (2), destined to be spaced out on the wall (P);
- at least one vase unit (20) made according to any of the previous claims, hanging between two struts (2).

11. System according to claim 10, wherein the vase units (20) can be hooked to the struts in an adjustable manner.

12. System according to claim 10 or 11, comprising an auxiliary beam (100) having:
- a portion of body (102) placed on an imaginary extension of the bottom beam (42).

13. System according to any of the claims from 10 to 12, comprising spacer beams (90), attached between the side walls (24) and positioned so as to vertically overlap, for example hooked to each other, so as to cover the distance between the upper end of the shoulder beam (70) of the tub (40) and a further vase unit overlapping said vase unit (20).

14. System according to any of the claims from 10 to 13, comprising a cornice (110) which defines the mouth of the tub (40) and detachable from it.

15. System according to any of the claims from 10 to 14, comprising at least one safety element (210), to prevent the escape of a fabric or sack (200) containing the soil, from the tub (40).
